# EUROPEAN PATENT APPLICATION

(11) **EP 4 672 595 A1**
(43) Date of publication of application: **31.12.2025**
(21) Application number: 24185488.4
(22) Date of filing: 28.06.2024
(51) Int. Cl.: H02S 10/00, H02S 20/20, B60P 1/54, B60P 3/14, B62D 63/06

(54) **MOBILE DEVICE FOR MOUNTING PANEL BLOCKS**

(71) Applicant: HORINKA, Milos, 97101 Prievidza (SK)
(72) Inventor: HORINKA, Milos, 97101 Prievidza (SK)
(74) Representative: Belicka, Ivan

(57) **Abstract**

Mobile device for the assembly of the panel blocks (B) characterized by the fact that it contains a chassis (4) with a coupling device (23) with at least one axle with wheels (19) or tracks (20) on which the base structure (3) is rotably and liftable fixed ) with the floor (5), while on one side, on both ends of the structure, the bases (3) are fixed by means of a joint (6a) folding stairs (1,1a) with another at least one swivel joint (6) for tilting them into the required mounting position and for folding them into the transport position, while the folding stairs (1,1a) are equipped with actuators (7) at each pivot joint (6, 6a) for positioning each part of the folding stairs (1,1a) to the required position and the upper part (22) of the folding stairs (1) is equipped with locking and synchronizing means (17, 17a) connected to the frame (11), between the folding stairs (1,1a) there is a movably placed work bench (2), on which the lower side is placed at least one drive (8) with a toothed wheel (9) for engaging the toothed rail (10) on the stairs (1), the other side of the base (3) is equipped with a frame (11) for fixing the shielding means (12), suspension elements ( 13) for storing tools and mounting fasteners, light reflectors, means of communication and speakers.

## Description

### Technical field

The invention is related to a mobile device for mounting panel blocks such as photovoltaic solar converters, photovoltaic solar panels or solar mirrors.

### Background

Nowadays, the panels are placed on the mentioned structures mainly handle by building special scaffolding, which must be uninstalled and moved to the next part of the structure, or by cranes or high-lift platforms, which often don't allow their use due to weather conditions and periods after rains for reasons of " driving" of the soil between the structures for fixing the panels. Currently, for ecological reasons, the mentioned constructions are raised by 1 to 1.5 m above the ground level and they reach a height of 4-6 meters, due to the grazing of the terrain by sheep, which ensures that mowing is not necessary. It increased the costs of operation, and at the same time the mentioned "field " terrain is economically and additionally used.

At present time, the trend is to increase the amount of energy from renewable sources (the EU aim is to achieve 45% of energy from renewable sources by 2030), which is a priority for photovoltaic panels due to the volume of sunny days in individual countries. These panels cover areas of several hectares and individual lines which can reach several kilometers, copying the terrain.

WO 2019/097348 A1 document describes a system for the outdoor installation of photovoltaic solar panels, in which a support frame for the photovoltaic solar panels is preinstalled in an open area, on which the photovoltaic solar panels are mounted on a supporting structure by a robot located on the vehicle deck. It moves above the installation field, while this robot places the photovoltaic solar panels on successive parts of the above-mentioned support structure. The main advantage of this solution lies in the possibility to make the operation of the installation of photovoltaic solar panels completely automatically. The vehicle that carries the robot can be, for example, an automated guided vehicle (AGV) or a remote-controlled vehicle. A display system is connected to the robot, which the robot's control system uses to correctly position of the photovoltaic solar panels, regardless of the variability of the vehicle's position relative to the supporting structure due to uneven terrain.

In another solution in the Italian IT patent application, there is proposed a method of assembly and installation in an open field of solar converter arrays, for example photovoltaic panels or even solar mirrors. The method concludes: a) the first step of assembly of the solar converter array, which is carried out by at least one robot in a mobile workstation temporarily located near the installation field as a "temporary factory"; b) the second step of transporting the array of solar converters assembled in the first step, where the assembled array of solar converters is transported from the above mentioned work station to the installation site using a cart; and c) the third step of installation the solar converter array, where the solar converter array is mounted on a row of support posts prearranged in the installation array. However, the mentioned solutions do not provide comprehensiveness and they are not properly organized to help with the quick and easy assembly of panel blocks, for example, to the solar power plant.

### Summary

The shortcomings described in the prior art are eliminated by a mobile device for mounting panel blocks on structures, defined in the protection claims, the main thing of which is that the structure is rotable and liftable fixed on a chassis with a coupling device, carried by at least one axle with wheels or tracks plinths with a floor, while on one side, on both ends of the plinth structure, folding stairs are fixed by means of a joint with another at least one pivoting joint for tilting them to the required mounting position and for folding them into the transport position. The folding stairs are equipped with the actuators for positioning each part of the folding stairs to the desired position at each swivel joint, and also in the upper part with locking and synchronizing means ensuring symmetrical folding, lowering and stabilization of the folding stairs in the desired position. A work bench is movably placed between the folding stairs, on which at least one drive with a gear wheel is placed from the bottom side to engage the rail on the stairs. The distance between the folding stairs can be adjusted depending on the length of the workbench, which depends on the size of the panel blocks. The other side of the base is equipped with a frame for fixing shading devices, for example in the form of an awning, hanging elements for storing tools and mounting fasteners, light reflectors, means of communication, including the speakers. The folding stairs and the work bench are equipped with a handrail to increase safety. The undercarriage with wheels or tracks contains leveling elements to adjust it to a horizontal position in case of uneven terrain. The undercarriage with wheels or tracks includes extendable stabilizing legs and height-adjustable draw bars on both sides. The chassis with wheels or on tracks is equipped with an independent drive unit. A crane for handling the panel blocks is fixed on the base structure or on the floor. The upper part of the frame and the upper part of the folding stairs is connected to the synchronization and stabilization device by means of belts, ropes or chains. The mobile device for the assembly of panel blocks is controlled by a controller with individual movement elements such as leveling elements, rotation and/or lift of the base structure in relation to the chassis, actuators on folding stairs, drive on the bench and also light reflectors via cables or wirelessly. The mobile device for the assembly of the panel blocks contains batteries for powering individual moving elements such as leveling elements, rotation and/or lift of the base structure in relation to the chassis, actuators on folding stairs, synchronization and stabilization means, drive on the bench, as well as light reflectors and communication means. The mobile device for mounting panel blocks includes a generator for charging the battery. The mobile device for the assembly of the panel blocks contains boxes and areas for storing tools and connecting material and constructions.

### Overview of images on drawings

Picture 1 shows a mobile device for assembling panel blocks. Picture 2 shows a mobile device for mounting panel blocks with a rotated base structure opposite the chassis. Picture 3 shows a mobile device for assembling panel blocks in an assembly position with stairs with a bench in a working position with panel blocks. Pictures 4 and 5 show the mobile device for mounting the panel blocks in the folded position into the transport position. Pictures 6 and 7 show a mobile device for mounting panel blocks in a transport position. Picture 8 shows the work bench drive. Picture 9 shows a gear meshing into a rail to drive a work bench up a folding step. Picture 10 shows a mobile panel block assembly device with a crawler chassis and a crane. Picture 11 shows a mobile installation of panel blocks with a crane. Picture 12 shows a mobile device for mounting panel blocks without a floor 5. Picture 13 shows a mobile device for mounting panel blocks in an extended and raised position with the panel blocks and the structure on which they are placed. Picture 14 shows a mobile device for assembling panel blocks by showing the displacement between the steps. Picture 15 shows a mobile device for mounting panel blocks in a raised position with extendable legs.

### Description of the invention

The mobile device for mounting the panel blocks B on the structures A has a chassis 4 with a height-adjustable coupling device 23, supported by at least one axle with wheels 19 or tracks 20, on which the structure of the base 3 with the floor 5 is rotably and liftable fixed, while on one side there are on both ends of the structure of the base 3 fixed by means of a joint 6a folding stairs 1,1a with another at least one rotating joint 6 for tilting them to the required mounting position and for folding them into the transport position. Folding stairs 1,1a are equipped with actuators 7 at each pivot joint 6,6a for positioning each part of folding stairs 1,1a to the desired position, and also the upper part 22 of folding stairs 1,1a is equipped with securing and synchronizing means 17, 17a located on the upper parts 11a of the frame 11 ensuring symmetrical folding, lowering and stabilization of folding steps 1,1a to the required position by means of means 17, 17a such as a belt, rope, chain. A work bench 2 is movably positioned between the folding steps 1.1a, on which at least one drive 8 with a gear wheel 9 is placed from the bottom side to engage the gear rail 10 on the steps 1.1a. The distance C between the folding steps 1.1a can be adjusted on the swivel joint 6a depending on the length of the workbench 2, which depends on the size of the panel blocks. The other side of the base 3 is equipped with a frame 11 for fixing shading devices 12, for example in the form of an awning, hanging elements 13 for storing tools and mounting fasteners, light reflectors, communication devices including speakers. Folding stairs 1,1a and workbench 2 are equipped with a railing 14 to increase safety.

The undercarriage 4 with wheels 19 or on tracks 20 contains leveling elements for adjusting it to a horizontal position in case of uneven terrain.

The chassis 4 with wheels 19 or on tracks 20 contains extendable stabilizing legs 18 and/or a height-adjustable coupling device 23 on both sides.

The chassis 4 with wheels 19 or tracks 20 is equipped with an independent drive unit.

A crane 16 for handling panel blocks B is fixed on the structure of the base 3 or on the floor 5. The upper part 11a of the frame 11 and the upper part 22 of the folding stairs 1,1a is equipped with securing and synchronizing means 17, 17a ensuring symmetrical folding, lowering and stabilization folding stairs 1.1a to the required position. The mobile device for mounting panel blocks B is controlled by a controller with individual movement elements such as leveling elements, device 21 for turning and lifting the base structure 3 in relation to the chassis 4, actuators 7 on the folding steps 1,1a, drive 8 on the bench 2 and also light reflectors via cables or wirelessly. The mobile device for the mounting panel blocks B contains batteries for powering individual moving elements such as leveling elements, device 21 for turning and lifting the structure of the base 3 in relation to the chassis 4, actuators 7 on folding steps 1, 1a, securing and synchronizing means 17, 17a drive 8 on bench 2 and also light reflectors and means of communication. The mobile device for mounting panel blocks B contains a generator for charging the battery. Mobile equipment for the assembly of panel blocks B contains boxes and surfaces for storing tools and fasteners, batteries, generators and structures.

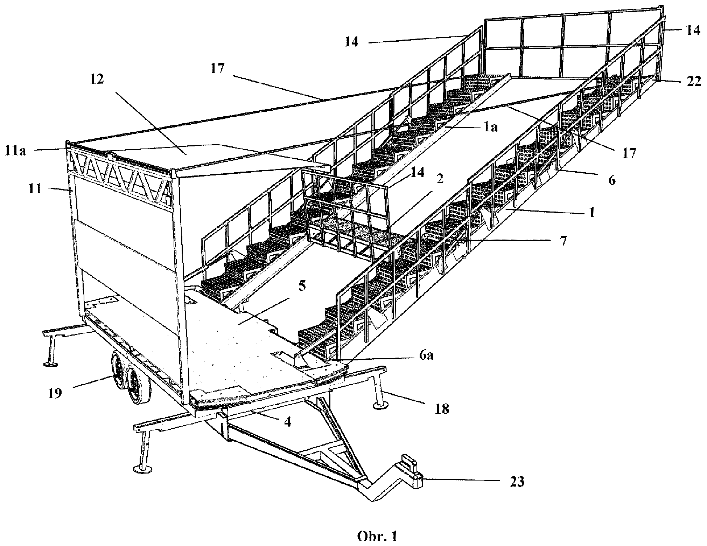

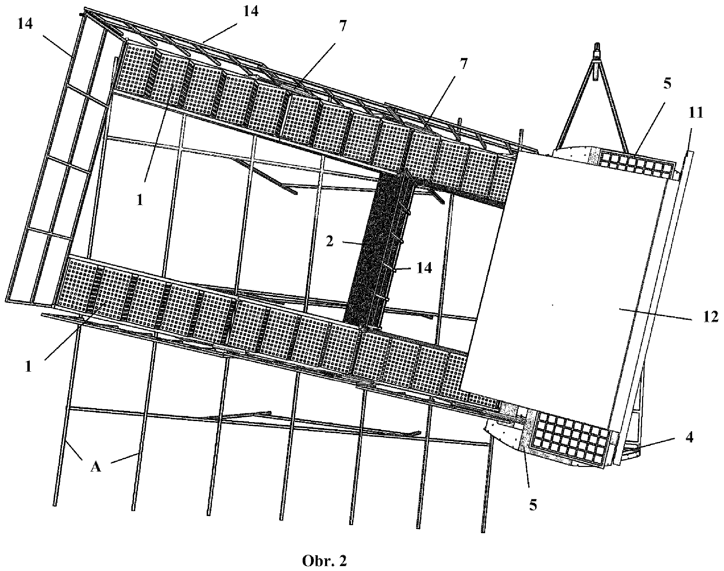

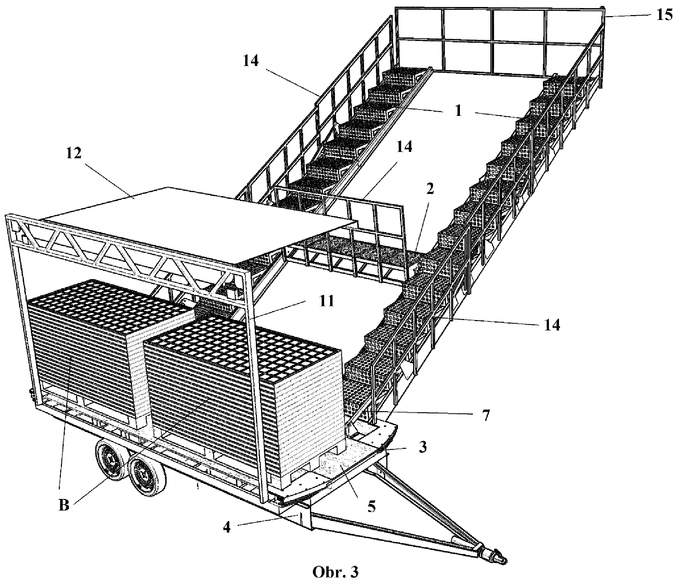

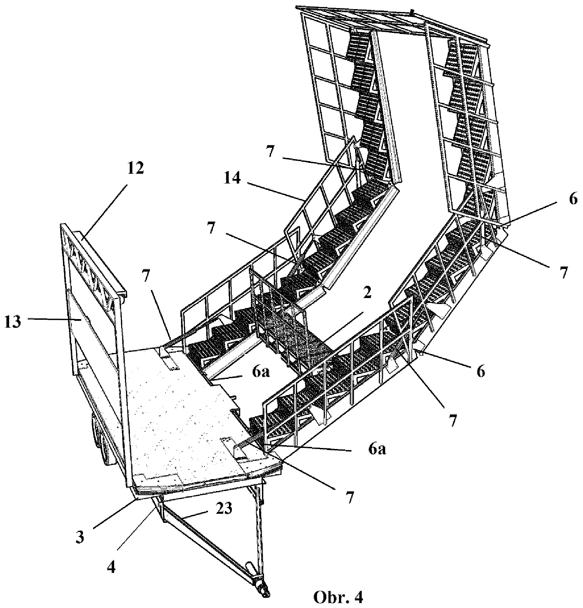

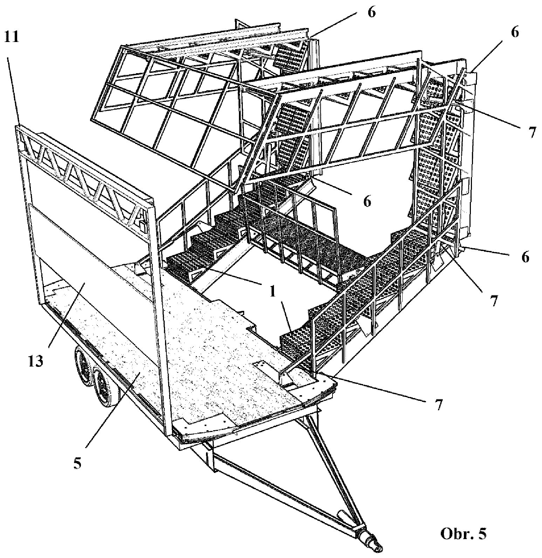

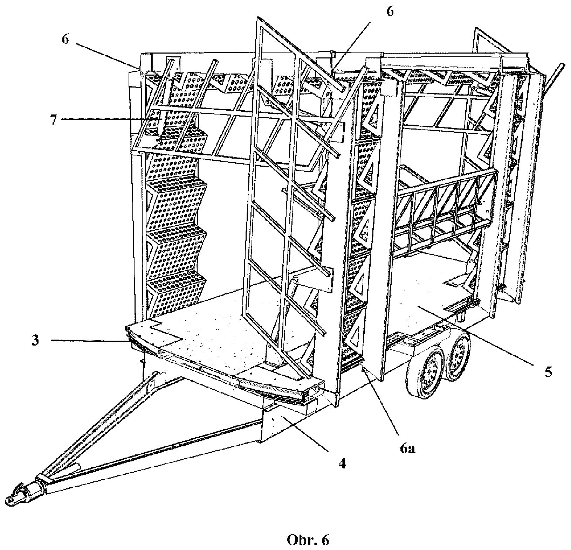

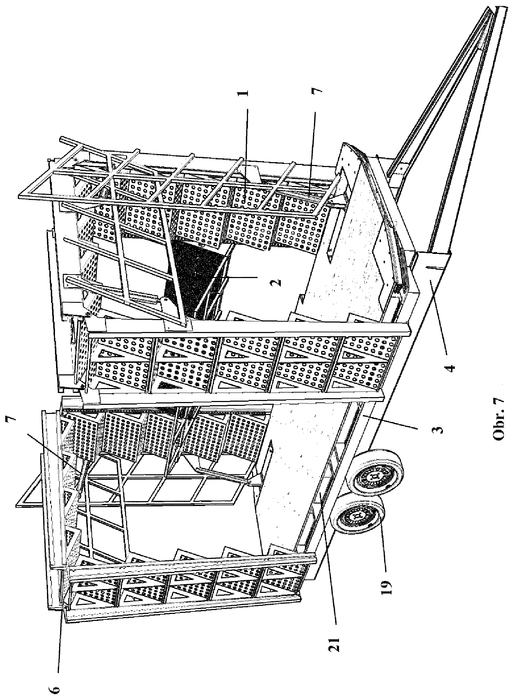

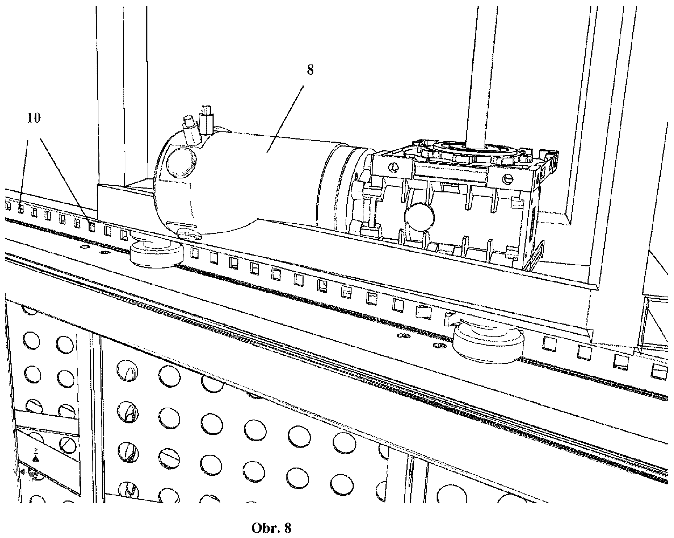

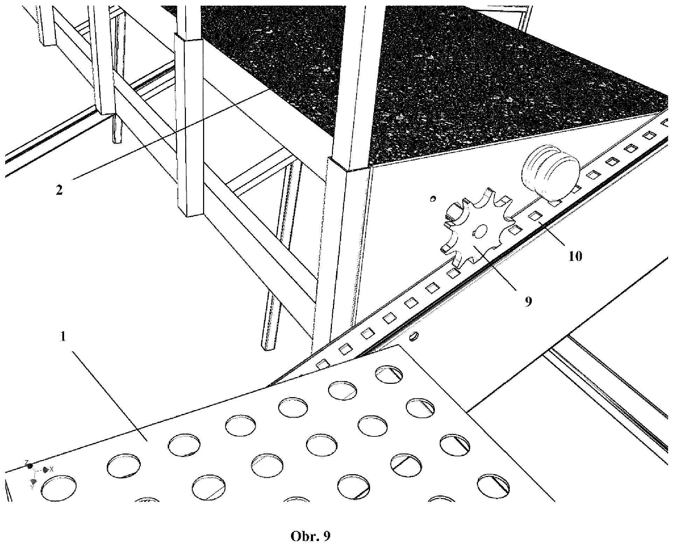

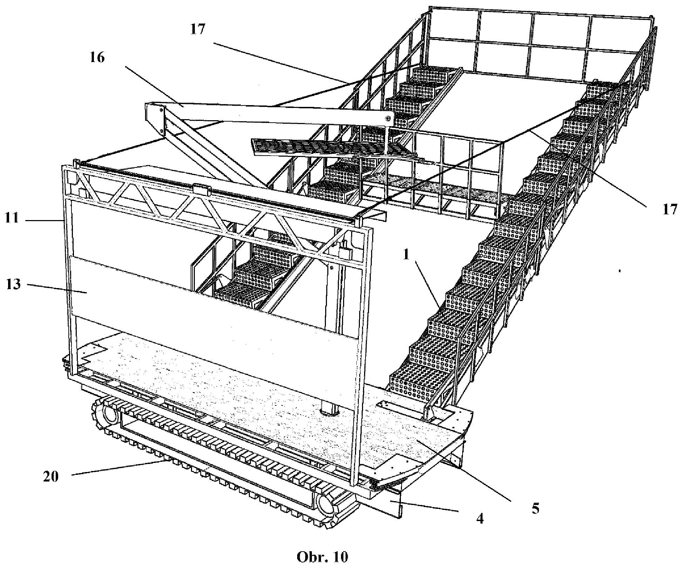

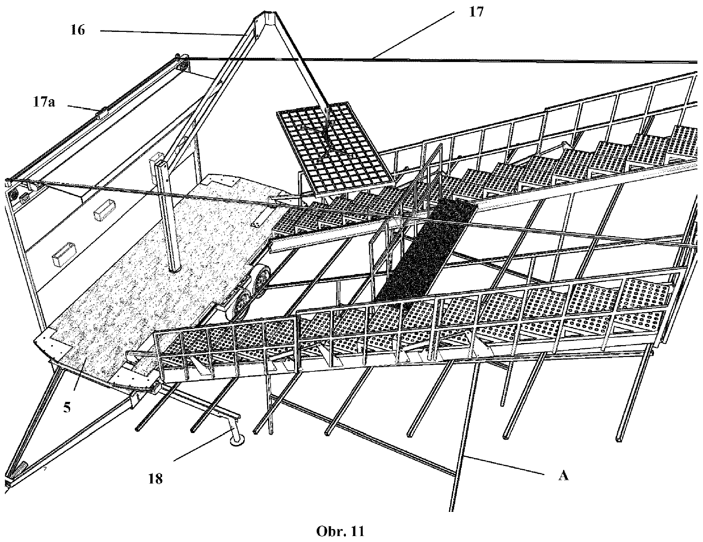

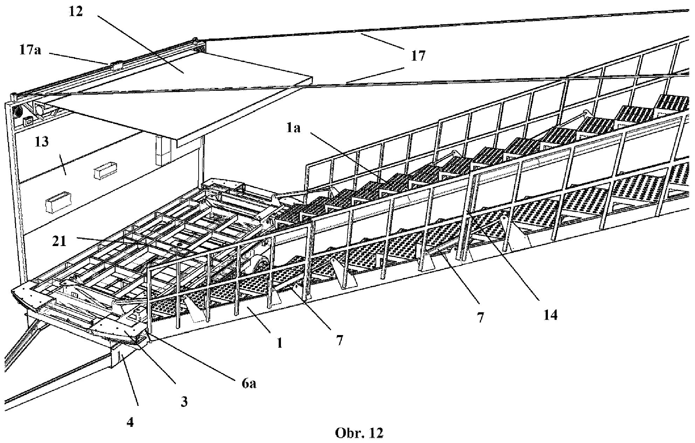

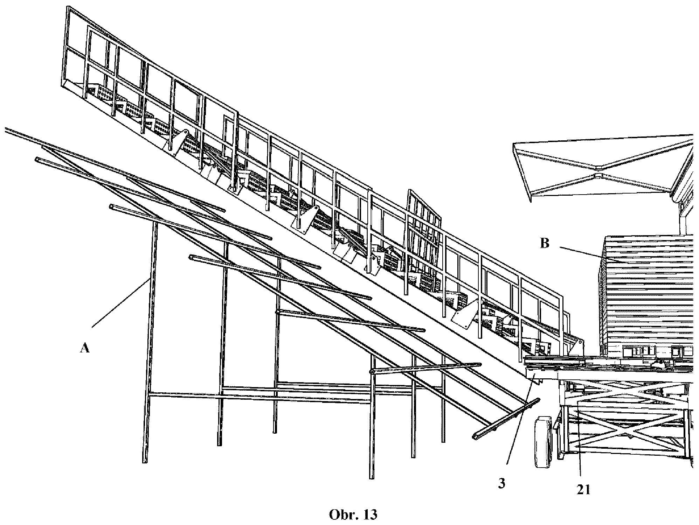

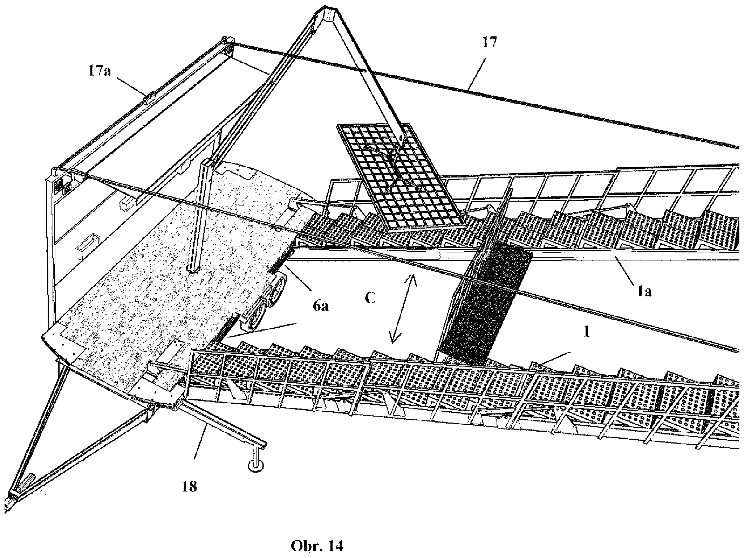

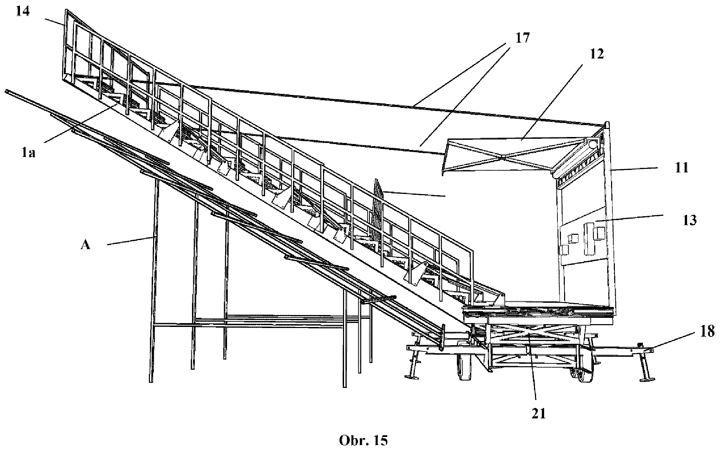

## Claims

1. Mobile device for the assembly of panel blocks (B) **characterized by** the fact that it contains a chassis (4) with a coupling device (23) with at least one axle with wheels (19) or tracks (20) on which the base structure is rotably and liftable fixed (3) with the floor (5), while on one side, on both ends of the structure, the bases (3) are fixed by means of a joint (6a) folding stairs (1, 1a) with another at least one swivel joint (6) for tilting them to the desired assembly position and for folding them into the transport position, while the folding stairs (1,1a) are equipped with actuators (7) at each pivot joint (6, 6a) for positioning each part of the folding stairs (1, 1a) to the desired position and the upper part (22) of the folding stairs (1,1a) is equipped with locking and synchronizing means (17, 17a) connected to the frame (11), between the folding stairs (1, 1a) there is a movably placed work bench (2) on which from the lower side, at least one drive (8) with a gear wheel (9) is located for engagement in the gear rail (10) on the stairs (1,1a), the other side of the base (3) is equipped with a frame (11) for fixing shading devices ( 12), hanging elements (13) for storing tools and mounting fasteners, light reflectors, means of communication and speakers.

2. Mobile device for assembling panel blocks (B) according to claim 1, **characterized in that** the folding steps (1, 1a) and the work bench (2) are equipped with a railing (14) to increase safety.

3. Mobile device for mounting panel blocks (B) according to claim 1 and/or 2, **characterized in that** the chassis (4) or tracked vehicle (20) includes a device (21) for turning and lifting the base structure (3) relative to the chassis ( 4) and leveling elements to adjust it to a horizontal position in case of uneven terrain.

4. Mobile device for mounting panel blocks (B) according to the preceding claims, **characterized in that** a crane (16) for handling the panel blocks (B) is fixed on the base structure (3) or on the floor (5).

5. Mobile device for mounting panel blocks (B) according to the previous claims, **characterized in that** the distance (C) between the folding steps (1,1a) can be adjusted on the swivel joint (6a) depending on the length of the work bench (2) .

6. Mobile device for mounting panel blocks (B) according to the previous claims, **characterized by** the fact that it contains a wired or wireless controller, controlling individual moving elements such as the device (21) for turning and lifting the structure of the base (3) relative to the chassis (4), leveling elements, actuators (7) on folding folding steps (1,1a), drive (8) on the bench (2) and also light reflectors connected via cables or wirelessly.

7. Mobile device for mounting panel blocks (B) according to the previous claims, **characterized by** the fact that it contains batteries connected to individual elements such as a device (21) for turning and lifting the base structure (3), leveling elements, actuators (7) on folding stairs (1,1a), drive (8) on the bench (2) and also light reflectors and means of communication.

8. Mobile device for mounting panel blocks (B) according to the preceding claims, **characterized in that** it contains a generator for charging the battery.

9. Mobile device for assembling panel blocks (B) according to the preceding claims, **characterized by** the fact that it contains boxes and surfaces for storing tools and connecting material, batteries, generator, structures.

10. Mobile device for mounting panel blocks (B) according to the preceding claims, **characterized in that** the chassis (4) is equipped with an independent drive unit.
